## Europäisches Patentamt
## European Patent Office
## Office européen des brevets

(19)

(11) Numéro de publication: **0 011 522**
**B1**

(12)

# FASCICULE DE BREVET EUROPEEN

(45) Date de publication du fascicule du brevet: **20.10.82**

(51) Int. Cl.³: **G 05 D 1/03, G 01 S 5/00, B 63 H 25/42**

(21) Numéro de dépôt: **79400731.0**

(22) Date de dépôt: **10.10.79**

(54) Dispositif de positionnement d'un mobile par un champ magnétique.

(30) Priorité: **17.11.78 FR 7832537**

(43) Date de publication de la demande:
**28.05.80 Bulletin 80/11**

(45) Mention de la délivrance du brevet:
**20.10.82 Bulletin 82/42**

(84) Etats contractants désignés:
**DE GB NL**

(56) Documents cités:
**FR - A - 2 124 090**
**FR - A - 2 245 022**
**FR - A - 2 339 900**
**FR - A - 2 354 589**
**GB - A - 1 173 442**
**GB - A - 1 485 180**
**US - A - 3 715 660**

(73) Titulaire: **THOMSON-CSF**
**173, Boulevard Haussmann**
**F-75360 Paris Cedex 08 (FR)**

(72) Inventeur: **Posseme, Gilles**
**"THOMSON-CSF" - SCPI 173, bld Haussmann**
**F-75360 Paris Cedex 08 (FR)**

(74) Mandataire: **Trocellier, Roger et al,**
**THOMSON-CSF SCPI 173, Bld Haussmann**
**F-75360 Paris Cedex 08 (FR)**

Courier Press, Leamington Spa, England.

# 0011522

## Dispositif de positionnement d'un mobile par un champ magnétique

La présente invention se rapporte au positionnement dynamique d'un mobile en mer par rapport à un champ magnétique crée localement. Le mobile comporte un ou plusieurs magnétomètres fournissant les composantes horizontales du champ magnétique dans le repère du mobile en un ou plusieurs points de ce mobile. Le champ magnétique est produit par un courant électrique alternatif parcourrant un ou plusieurs fils verticaux solidaires d'une installation fixe.

Des signaux aptes à commandes le mouvement du mobile sont élaborés à partir des mesures du champ magnétique local et de la mesure de l'angle d'orientation du mobile pour placer le mobile en une position déterminée.

Plus spécialement l'invention s'applique à des navires devant être immobilisées en mer et plus particulièrement près d'une plateforme de forage. La méthode consistant à immobiliser un navire muni de propulseurs corrigeant l'action du vent, du courant et de la houle est appelée ancrage dynamique.

Une méthode connue d'ancrage dynamique, consiste à tendre un câble entre le navire et un point fixe au fond de la mer et de mesurer à bord, les angles d'inclinaison du câble par rapport à des repères liés au navire. Un calculateur, à partir de ces mesures angulaires et de la mesure du cap du bateau par gyrocompas, élabore les signaux de commande des propulseurs pour immobiliser le navire.

L'inconvénient de cette méthode d'ancrage dynamique est de nécessiter de relier le bateau au fond par un fil tendu.

Il est connu par le document FR—A—2245022, de positionner un navire par rapport à un autre, par la mesure sur un navire de la direction d'ondes acoustiques émises par l'autre navire. Cette direction étant obtenue par la mesure du déphasage des signaux reçus par deux microphones.

Cette méthode a l'inconvénient d'être difficile à mettre en oeuvre à cause des bruits environnants et celui du bateau lui-même.

Il en est de même pour les méthodes de positionnement par radar, qui présentent notamment le désavantage que les signaux peuvent être brouillés par suite de la présence d'autres bateaux également munis de radar.

Finalement les méthodes de positionnement optiques ont le désavantage de ne pas être utilisables par temps de brouillard et en présence de fumée.

Il est connu, par le document FR—A—2124090, de mesurer la distance et la position d'une source de rayonnement par des mesures des champs magnétiques et électriques de l'onde guidée à la surface du sol ou de la mer. Cette méthode fournit la distance de la source de rayonnement et permet sa localisation en utilisant un capteur orientable ou deux capteurs rectangulaires.

La localisation de la source peut se faire par des mesures de champ magnétique seulement, à condition de connaître la conductivité pour l'onde de surface.

La méthode décrite s'applique à une détection de champ lointain et nécessite une antenne pour la détection des ondes électromagnétiques et les mesures ne peuvent être faites avec de simples magnétomètres.

Il est également connu de positionner un navire par rapport à deux radio-balises situées sur deux installations fixes distantes l'une de l'autre, par les documents GB—A—1173442 et GB—A—1485180. La comparaison des phases entre un signal radio-électrique émis et reçu par réponse des balises, permet connaissant l'orientation du navire par un gyrocompas de commander les propulseurs du navire. Cette méthode a l'inconvénient pour un ancrage près d'une plateforme de nécessité deux installations distantes.

Il est également connu, par le document FR—A—2339900, de guider un véhicule par la mesure de phase entre deux champs électriques alternatifs émis par deux boucles disposés horizontalement dans l'eau sous le navire. Cette disposition ne convient pas pour la navigation en haute mer.

Il est connu par le document FR—A—2354589 de guider automatiquement un véhicule au-dessus d'une canalisation sous-marine en acier par des mesures du champ magnétique terrestre perturbé par la canalisation. Le véhicule autopropulsé est relié par un câble à un bâtiment se surface et il porte à droite et à gauche un certain nombre de magnétomètres fournissant les modules du champ magnétique en différents points transversaux. Les valeurs de champ magnétique mesurés permettent d'élaborer des signaux de dissymétrie droite-gauche, qui sont utilisés pour actionner les propulseurs du véhicule. Il est possible également de guider le véhicule manuellement à partir du bâtiment de surface. Le dispositif n'étant utilisé que pour un guidage suivant l'axe d'une canalisation, ne convient pas à l'ancrage dynamique.

La présente invention présente l'avantage par rapport à l'Art Antérieur de permettre un ancrage dynamique par les mesures du cap et des composantes horizontales du champ magnétique. Ce champ magnétique étant créé artificiellement par un courant alternatif passant dans au moins un fil vertical. Les mesures se faisant par au moins un couple de magnétomètres pour un champ magnétique alternatif. Ces mesures sont indépendantes des marées et de la houle et l'ancrage dynamique est obtenu sans manoeuvres préalables, ce qui représente un avantage par temps de brouillard et de grosse mer.

**0011 522**

La présente invention permet également, un navire étant ancré dynamiquement en une première position de l'ancrer dynamiquement en une deuxième position choisie.

Brièvement c'est un dispositif de positionnement d'un mobile en mer dans un plan horizontal repéré par des axes OX et OY, le mobile comportant des moyens pour mesurer son angle d'orientation $\theta$ et le mobile ayant des moteurs permettant son déplacement dans le plan OXY, le mobile comporte en outre des moyens permettant de déterminer des paramètres dépendant des coordonnées du mobile X et Y dans le plan OXY ainsi qu'une mémoire qui contient les valeurs particulières de ces deux paramètres pour une position choisie des coordonnées $X_p$ et $Y_p$ et des moyens de calcul qui permettent d'élaborer à partir de ces mesures les signaux de commande des moteurs pour le déplacement du mobile vers la position choisie, caractérisé par le fait que sur une plateforme ou un navire sont disposés des moyens pour produire un champ magnétique alternatif, par au moins un fil vertical, parcouru par un courant alternatif à la fréquence f, l'amplitude de ce champ magnétique ayant pour composantes $H_x$ et $H_y$ sur les axes OX et OY, que le mobile comporte au moins un couple de magnétomètres fournissant les valeurs des amplitudes des composantes du champ magnétique par rapport à des axes OX, OY liés au mobile; qu'à partir des valeurs de ces composantes du champ magnétique un circuit de calcul recevant la valeur de $\theta$ fournit les valeurs des composantes du champ magnétique $H_x$ et $H_y$ et que les deux paramètres mis en mémoire sont soient: les coordonnées $X_p$, $Y_p$, soient les valeurs des composantes du champ magnétique $H_x^{(p)}$, $H_y^{(p)}$, correspondant à la position choisie.

D'autres caractéristiques et avantages ressortiront de la description illustrée par les figures qui représentent:

— la figure 1, une vue schématique d'un navire en ancrage dynamique suivant l'invention;
— les figures 2a et 2b, un block diagramme d'un dispositif d'ancrage dynamique dans une position choisie, suivant l'invention;
— la figure 3, le circuit d'informations de cap;
— les figures 4a et 4b, des circuits de changements de coordonnées;
— la figure 5, un schéma d'un navire muni de 3 couples de magnétomètres pour la détermination des variations locales de champ dans le repère mobile;
— la figure 6, un schéma d'ancrage dynamique par utilisation des mesures de variation de champ magnétiques;
— la figure 7, un schéma de montage des couples de magnétomètres;
— la figure 8, un schéma des circuits de calcul des dérivées partielles locales du champ magnétique par rapport aux coordonnées mobiles;
— la figure 9, un schéma des circuits de calcul des dérivées partielles locales des variations de positions par rapport au champes magnétique;
— les figures 10, 11 et 12, des détails du schéma de la figure 9;
— la figure 13, un schéma d'un dispositif d'ancrage dynamique en une nouvelle position après ancrage dynamique en une première position.

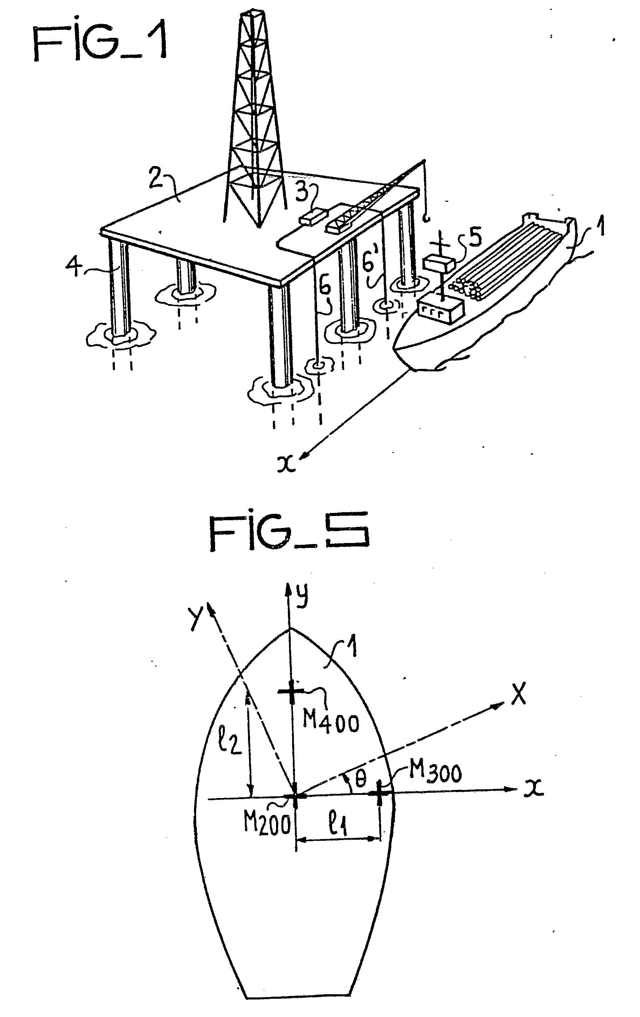

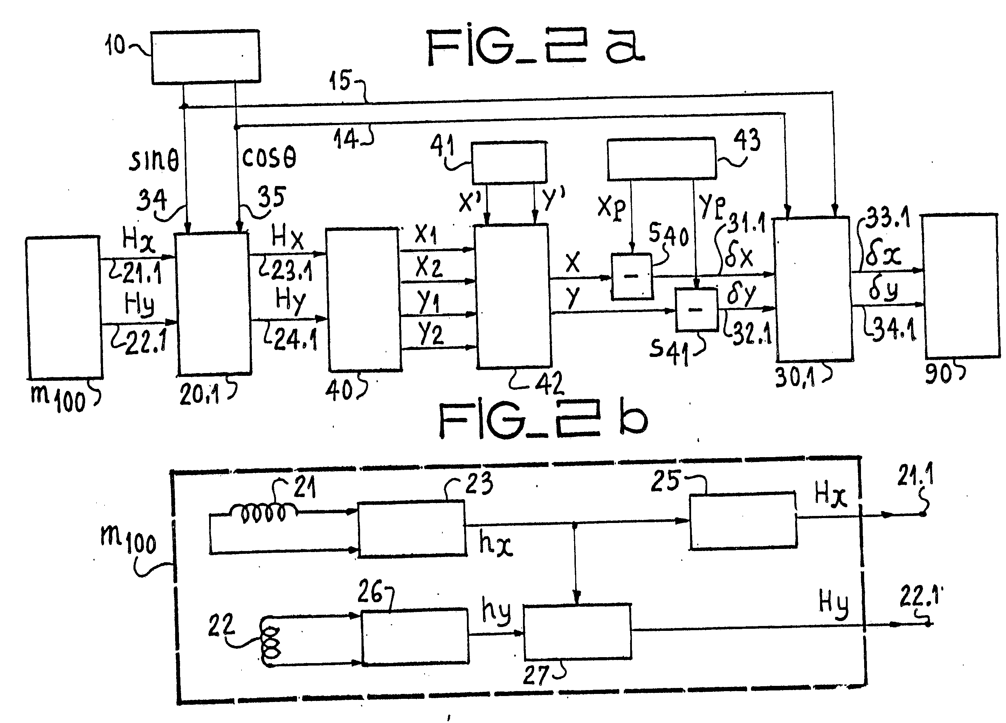

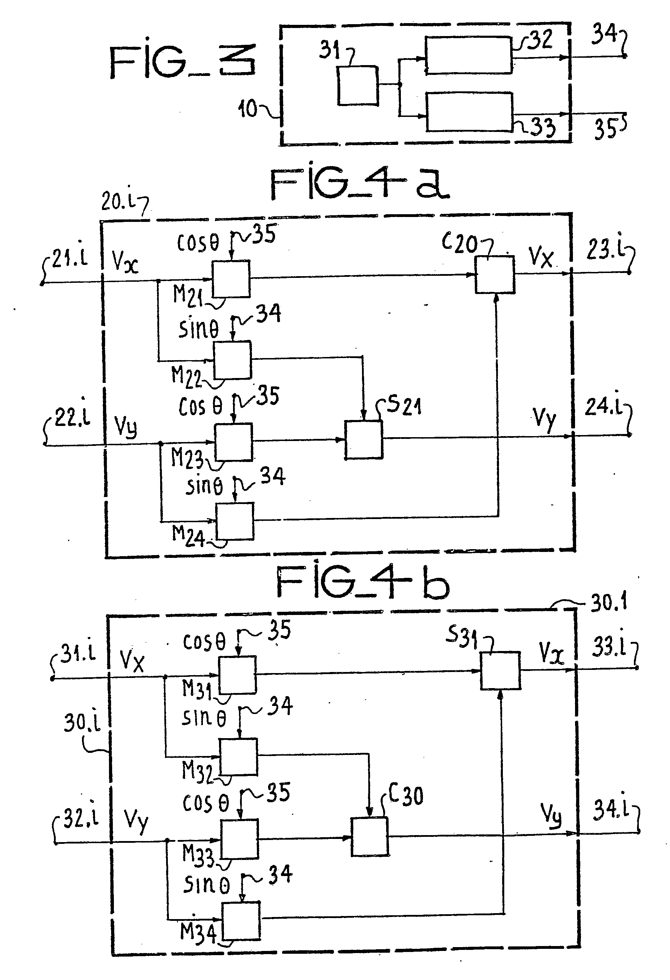

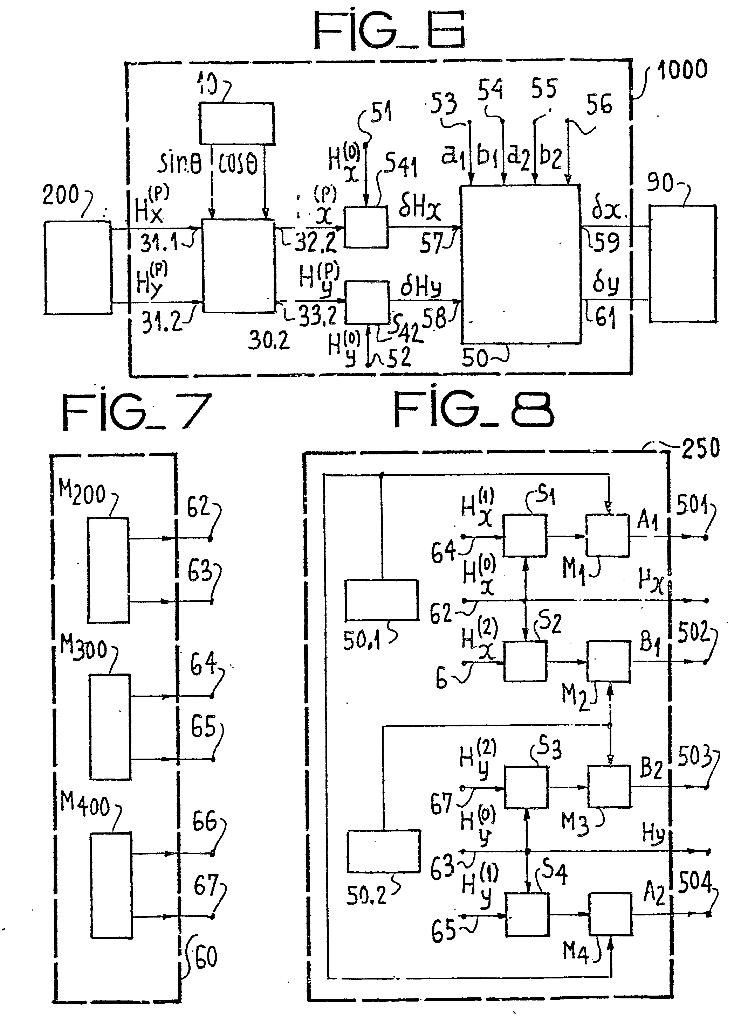

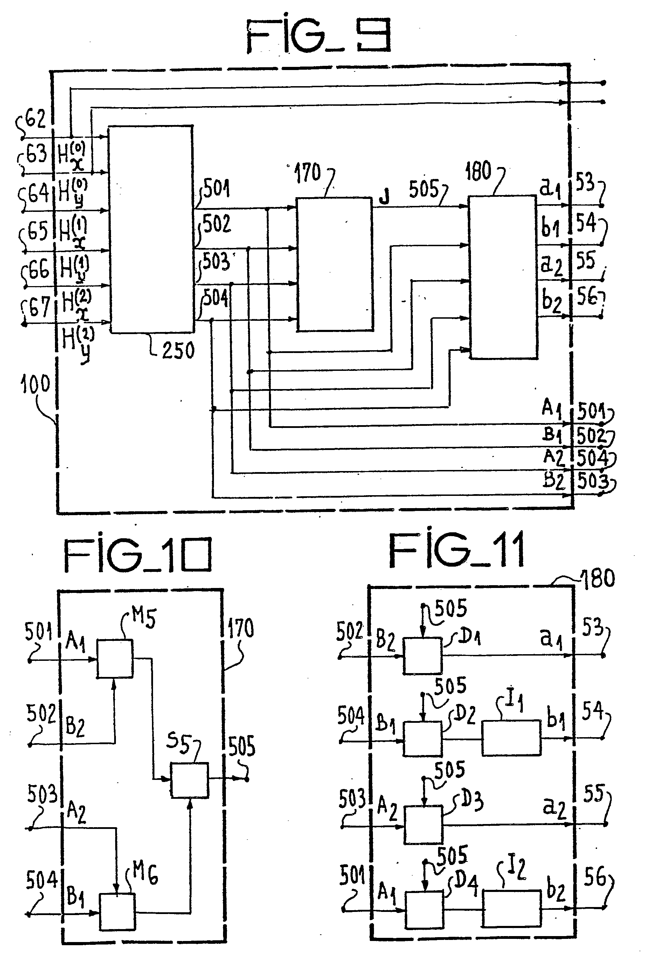

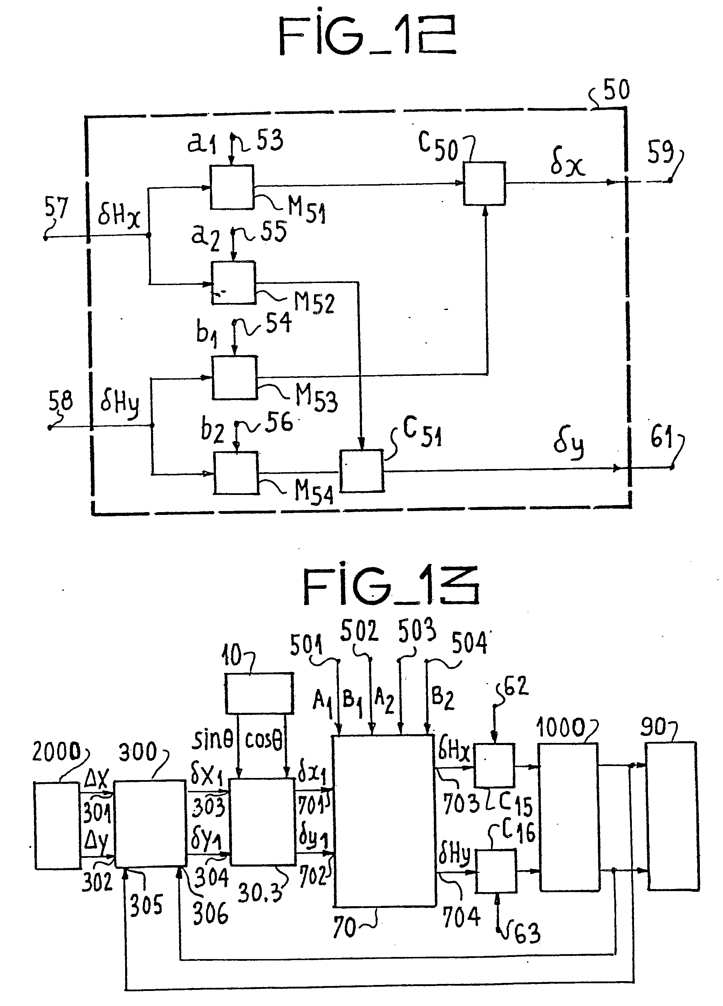

La figure 1 montre une vue schématique d'un ancrage dynamique d'un navire 1 suivant l'invention. Une plate-forme 2 que l'on suppose placée sur le fond de la mer par des pieds 4 comporte des fils 6 et 6' qui plongent verticalement dans la mer et qui sont reliés dans leur partie inférieure et parcourus par un courant alternatif d'intensité i fourni par un générateur 3. D'ailleurs dans certains cas on peut utiliser directement la mer pour fermer le circuit.

De même, on peut utiliser la mer pour fermer le circuit d'un seul fil plongeant verticalement, le retour s'effectuant en un lieu suffisamment éloigné, pour considérer que le champ magnétique n'est produit que par un seul fil.

Si l'on prend des axes de coordonnées OX et OY liés à la plate-forme, le champ magnétique alternatif sur ces axes aura pour composantes $h_x$ et $h_y$ au point de coordonnées X et Y tel que:

$$h_x = H_x \sin 2\pi ft$$

et

$$h_y = H_y \sin 2\pi ft \tag{1}$$

où f est la fréquence du courant qui produit ce champ magnétique et t le temps, $H_x$ et $H_y$ sont les amplitudes des composantes du champ magnétiques, que pour simplifier on appelera par la suite "composantes".

Le bateau 1 comporte des magnétomètre 5 qui mesurent les composantes du champ magnétiques $H_x$ et $H_y$ par rapport à des axes x et y liés au bateau.

Ce sont les valeurs mesurées qui seront utilisées pour la commande de l'ancrage dynamique du bateau.

Dans certains cas les valeurs de $H_x$ et $H_y$ peuvent être calculées directement à partir des valeurs de X et Y et inversement connaissant $H_x$ et $H_y$ on peut calculer les coordonnées correspondantes.

Si par exemple, on peut considérer les longuers S des fils 6 et 6' comme infinies par rapport à la distance R entre la plate-forme et le bateau et de plus si la distance E entre les fils 6 et 6' peut

3

également être considéré comme infinie par rapport à R, on a les relations simples entre les coordonnées et les composantes du champ:

$$X=H_x I/(2\pi H^2)$$

et

$$(2)$$

$$Y=H_Y I/(2\pi H^2)$$

avec $i=I \sin 2\pi ft$

$$H^2=H_X^2+H_Y^2$$

et

On voit que la connaissance de $H_x$ et $H_Y$ permet dans ce cas, le calcul des coordonnées X et Y, l'origine se trouvant sur le fil 6, qui produit le champ local.

Si les deux fils 6 et 6′ ne sont pas très éloignés les relations (2) sont remplacées par des expressions connues un peu plus compliquées. Il en est de même si R devient grand par rapport S.

Si la fréquence f utilisée dépasse 1000 Hz les relations analytiques entre les composantes du champ magnétique et les coordonnées deviennent plus compliquées, par suite des pertes diélectriques dans l'eau du type "effet de peau". Dans ce cas il peut être préférable de relever directement les fonctions $X(H_x, H_Y)$ et $Y(H_x, H_Y)$ expérimentalement, afin de les introduire dans des mémoires.

Dans la version préférée de l'invention on utilise un positionnement par un champ magnétique alternatif, qui est détecté par des magnétomètres disposés à bord du navire et accordés sur la fréquence f. On ne détecte ainsi que le champ magnétique produit et non les champs magnétiques parasites, notamment ceux produits par le champ magnétique terrestre et ceux produits par les objets métalliques. On a d'ailleurs intérêt à ce que f soit aussi différent que possible des harmoniques de la fréquence du secteur 50 Hz ou 60 Hz.

Il est connu de mesurer des champs magnétiques alternatifs dans une bande de 10 Hz avec une précision de $3\times10^{-3} \gamma$ ou $2,4\times10^{-6}$ A/m en unités M.K.S.A.

Une réalisation à une fréquence voisine de 300 Hz a donné un champ magnétique de 0,3 $\gamma$ ou $2,4\times10^{-4}$ A/m pour un courant efficace de 700 mA avec un rapport signal sur bruit de 40 dB à une distance de 50 m.

Pour mesurer les deux composantes horizontales du champ magnétique, il est connu d'utiliser deux magnétomètres placés à 90° l'un par rapport à l'autre. Les magnétomètres utilisés peuvent être par exemple du type bobine fluxmétrique.

Pour calculer ces composantes dans les axes fixes qui sont généralement parallèles aux axes géographiques, il faut connaître l'angle de cap $\theta$, où $\theta$ est l'angle entre les axes x et X.

On a la relation de changement de coordonnées

$$H_X=H_x \cos \theta - H_y \sin \theta$$

$$(3)$$

$$H_Y=H_x \sin \theta + H_y \cos \theta$$

Il en résulte que si l'on connaît les composantes $H_x$ et $H_y$ ainsi que le cap et les relations qui relient les composantes $H_X$ et $H_Y$ aux coordonnées fixes X et Y (par exemple la relation (2) pour un fil vertical infini), on peut déterminer les valeurs des coordonnées fixes d'un bateau.

Pour déterminer les signes relatifs de $h_x$ et $h_y$ de la relation (1), on démodule par exemple $h_y$ par $h_x$. Il peut alors subsister une ambiguïté du fait que l'on ne connait pas le signe par rapport au courant instantané. Pratiquement on lève le doute par connaissance grossière de la position du bateau par rapport à la plate-forme.

La figure 2a, montre un schéma d'ancrage dynamique suivant l'invention.

Le couple de magnétomètres $m_{100}$ fournit les composantes $H_x$ et $H_y$ respectivement en 21.1 et en 22.1.

Le circuit de calcul 20.1 reçoit à ses entrées les valeurs de $H_x$ et $H_y$ d'une part et les valeurs de sin $\theta$ et cos $\theta$ en 34 et 35. Le circuit 20.1 fournit sur ses sorties 23.1 et 24.1, les valeurs des composantes dans le repère fixe $H_X$ et $H_Y$ suivant la relation (3).

Un circuit 40 reçoit sur ses entrées les valeurs de $H_X$ et $H_Y$ et fournit sur ses sorties des couples de valeurs de coordonnées fixes $X_1$, $Y_1$ et $X_2$, $Y_2$. Ces valeurs multiples peuvent être dues à l'incertitude sur le signe des valeurs instantanées des composantes $h_x$ et $h_y$, qui peut produire une ambiguïté pour le calcul des composantes par le circuit 40. Ce circuit détermine $X(H_X, H_Y)$ et $Y(H_X, H_Y)$ soit par une relation analytique, soit qu'il contient ces fonctions en mémoire.

Le circuit de décision 42 permet le lever du doute par une connaissance de valeurs approximatives des coordonnées X′ et Y′ fournies par le circuit 41. Il reçoit d'autre part les valeurs des couples $X_1$, $Y_1$ et $X_2$, $Y_2$ et délivre les valeurs des coordonnées X et Y.

Le circuit 41 reçoit les valeurs de X′ et Y′ soit manuellement soit à partir d'un calculateur de navigation.

Un circuit mémoire 43 contient les valeurs des coordonnées de positionnement souhaitées $X_p$ et $Y_p$.

Les circuits de soustraction $S_{40}$ et $S_{41}$ fournissent en 31.1 et en 32.1 les valeurs $\delta X=X-X_p$ et $\delta Y=Y-Y_p$.

Un circuit de calcul 30.1, permet de passer des valeurs $\delta X$ et $\delta Y$ aux valeurs de corrections en coordonnées mobiles $\delta x$ et $\delta y$, le circuit 30.1 recevant sur ses entrées les valeurs de $\sin\theta$ et $\cos\theta$ en 15 et en 14.

Finalement les signaux d'erreur $\delta x$ et $\delta y$ sont appliqués au dispositif 90 qui corrige la position du bateau, suivant des méthodes connues.

La figure 2b, montre des détails du couple de magnétomètres $m_{100}$. Les bobines de détection 21 et 22 sont sensibles aux composantes suivant x et y. Les circuits 23 et 26 sont des amplificateurs sélectifs pour la fréquence f, 25 est un circuit de démodulation fournissant $H_x$ en 21.1. Le circuit 27 est un démodulateur synchrone de $h_y$ par $h_x$ et $H_y$ est obtenue en 22.1.

Le dispositif 10 de la figure 2a est montré sur la figure 3. Un gyrocompas 31 donne la valeur du cap $\theta$ par rapport aux coordonnées géographiques et les circuits 32 et 33 calculent les valeurs de $\sin\theta$ et $\cos\theta$ obtenues sur les sorties 34 et 35.

Les circuits de changement de coordonnées 20.1 et 30.1 de la figure 2a sont montrés sur les figures 4a et 4b. Le circuit tel que 20.i (figure 4a), réalise l'opération donnée par la relation (2), recevant les valeurs de $\sin\theta$ et $\cos\theta$ en 34 et en 35.

Les valeurs des composantes d'un verteur $\vec{V}$ quelconque en coordonnées x et y, $V_x$ et $V_y$ entrent en 21.i et 22.i. Les valeurs des composantes de $\vec{V}$ en coordonnées fixes $V_X$ et $V_Y$ sont délivrées aux sorties 23.i. et 24.i. Le circuit 20.i. comprend des circuits de multiplication $M_{21}$, $M_{22}$, $M_{23}$ et $M_{24}$, le circuit d'addition $C_{20}$ ainsi que le circuit de soustraction $S_{21}$.

L'opération inverse consistant à passer des composantes $V_X$ et $V_Y$ aux composantes $V_x$ et $V_y$ d'un vecteur $\vec{V}$ est montré par le circuit 30.i de la figure 4b.

Il comprend des circuits multiplicateurs $M_{31}$, $M_{32}$, $M_{33}$ et $M_{34}$, un circuit d'addition $C_{30}$ et un circuit de soustraction $S_{31}$.

Suivant une variante de l'invention on place sur la bateau 1 (figure 5), trois magnétomètres $M_{200}$, $M_{300}$ et $M_{400}$ en x et y, tel que celui montré figure 2b, le premier $M_{200}$ est placé à l'origine des coordonnées mobiles, le second $M_{300}$ a pour coordonnées $x=l_1$, $y=0$ et le troisième $M_{400}$ a pour coordonnées $x=0$, $y=l_2$.

On dispose ainsi, des variations locales des composantes du champ magnétique et donc des dérivées partielles de ces composantes dans le repère mobile. Si donc on connait les valeurs de ces composantes du champ à la position cherchée, on peut à partir des écarts par rapport aux valeurs des composantes mesurées, déduire les valeurs de correction.

Le magnétomètre $M_{200}$ donne les valeurs des composantes $H_x^{(o)}$ et $H_y^{(o)}$, le magnétomètre $M_{300}$ les valeurs $H_x^{(1)}$ et $H_y^{(1)}$ et le magnétomètre $M_{400}$ les valeurs $H_x^{(2)}$ et $H_y^{(2)}$.

On obtient ainsi, une valeur approchée des dérivées partielles

$$\frac{\partial H_x}{\partial x}, \quad \frac{\partial H_x}{\partial y}, \quad \frac{\partial H_y}{\partial x} \quad \text{et} \quad \frac{\partial H_y}{\partial y}$$

par les relations:

$$\frac{\partial H_x}{\partial x}=\frac{H_x^{(1)}-H_x^{(o)}}{l_1}=A_1$$

$$\quad (4)$$

$$\frac{\partial H_x}{\partial y}=\frac{H_x^{(2)}-H_x^{(o)}}{l_2}=B_1$$

$$\frac{\partial H_y}{\partial x}=\frac{H_y^{(1)}-H_y^{(o)}}{l_1}=A_2$$

$$\quad (4)$$

$$\frac{\partial H_y}{\partial y}=\frac{H_y^{(2)}=H_y^{(o)}}{l_2}=B_2$$

A un déplacement du bateau exprimé en coordonnées x, y; $\delta x$ et $\delta y$ correspond une variation des composantes du champ magnétique $\delta H_x$ et $\delta H_y$ telle que:

$$\delta H_x=A_1\delta x+B_1\delta y$$

et

$$\delta H_y=A_2\delta x+B_2\delta y$$

$$\quad (5)$$

Inversement on peut, connaissant $\delta H_x$ et $\delta H_y$ calculer $\delta x$ et $\delta y$ par les relations:

$$\delta x = a_1 \delta H_x + b_1 \delta H_y$$

$$\delta y = a_2 \delta H_x + b_2 \delta H_y \tag{6}$$

de (5) on déduit que:

$$a_1 = B_2/J, \; b_1 = -B_1/J, \; a_2 = -A_2/J \text{ et } b_2 = /J \text{ où}$$

$$J = A_1 B_2 - A_2 B_1.$$

Le calcul des corrections $\delta x$ et $\delta y$ par la relation (6) est utilisé dans le montage d'ancrage dynamique de la figure 6.

On fixe un position d'équilibre par les valeurs mémorisées en 200 des composantes du champ $H_X^{(p)}$ et $H_Y^{(p)}$ dans le repère fixe. Le circuit de changement de coordonnées 30.2 reçoit ces composantes en 31.1 et 31.2, ainsi que les valeurs de $\sin \theta$ et $\cos \theta$.

Les valeurs obtenues des composantes du champ, $H_x^{(p)}$ et $H_y^{(p)}$ dans le repère mobile sont appliquées aux circuits de soustraction $S_{41}$ et $S_{42}$, qui reçoivent respectivement en 51 et en 52 les valeurs $H_x^{(o)}$ et $H_y^{(o)}$, fournissant ainsi

$$\delta H_x = H_x^{(p)} - H_x^{(o)} \text{ et } \delta H_y = H_y^{(p)} - H_y^{(o)}.$$

Le circuit de calcul 50 reçoit ces valeurs $\delta H_x$ et $\delta H_y$ en 57 et 58 et d'autre part les valeurs $a_1$, $b_1$, $a_2$ et $b_2$ en 53, 54, 55 et 56. Exécutant le calcul de la relation (6) le circuit 50 fournit les valeurs $\delta x$ et $\delta y$ en 59 et 61 au système de correction de position 90.

La figure 7 montre l'ensemble 60 des magnétomètres $M_{200}$, $M_{300}$ et $M_{400}$ avec ses sorties 62, 63, 64, 65, 66 et 67 fournissant les composantes $H_x^{(o)}$, $H_y^{(o)}$, $H_x^{(1)}$, $H_y^{(1)}$, $H_x^{(2)}$ et $H_y^{(2)}$. Ces valeurs sont appliquées au circuit de calcul des dérivées partielles $A_1$, $B_1$, $A_2$ et $B_2$; 250, montré par la figure 8.

Le calcul est celui de la relation (5). Les valeurs $1/1_1$ et $1/1_2$ sont mémorisées en 50.1 et 50.2; $S_1$, $S_2$, $S_3$ et $S_4$ sont des circuits de soustraction; $M_1$, $M_2$, $M_3$ et $M_4$ des circuits de multiplication. Les valeurs de $A_1$, $B_1$, $B_2$ et $A_2$ sont obtenues aux sorties 501, 502, 503 et 504.

Le circuit de calcul 100 des dérivées partielles $a_1$, $b_1$, $a_2$ et $b_2$, d'après la relation (6), est montré par la figure 9. La valeur de J est calculée par le circuit 170 à partir des valeurs $A_1$, $B_1$, $A_2$ et $B_2$ fournies par le circuit 250 et finalement le circuit 180 recevant ces valeurs et la valeur J délivre les valeurs $a_1$, $b_1$, $a_2$ et $b_2$ en 50, 54, 55 et 56.

Le circuit 170 est montré par la figure 10.

Il reçoit à ses entrées 501, 502, 503 et 504 les valeurs $A_1$, $B_1$, $B_2$ et $A_2$ et fournit la valeur J sur sa sortie 505. Il comprend les circuits multiplicateurs $M_5$ et $M_6$ ainsi que le circuit soustracteur $S_5$.

Les éléments du circuit de calcul 180 sont montrés par la figure 11. Il reçoit sur ses entrées 501, 502, 503 et 504 les valeurs $A_1$, $B_2$, $A_2$ et $B_1$ et en 505 la valeur de J.

Les circuits $D_1$, $D_2$, $D_3$ et $D_4$ opèrent la division et à la sortie du circuit 180 on obtient en 53, 54, 55 et 56 les valeurs de $a_1$, $b_1$, $a_2$ et $b_2$. Les circuits $I_1$ et $I_2$ sont des inverseurs qui changent le signe.

Le circuit de calcul 50 de la figure 6 est montré par la figure 12.

Il reçoit sur ses entrées 57 et 58 les valeurs de $\delta H_x$ et $\delta H_y$ et il fournit sur ses sorties 59 et 61 les valeurs de $\delta x$ et $\delta y$ d'après la relation (6).

Le circuit 50 reçoit les valeurs de $a_1$, $a_2$, $b_1$ et $b_2$ en 53, 55, 54 et 56. Il comprend les circuits multiplicateurs $M_{51}$, $M_{52}$, $M_{53}$ et $M_{54}$ ainsi que les circuits additionneurs $C_{50}$ et $C_{51}$.

Suivant une variante de l'invention il est possible étant ancré dynamiquement en un point $P_o$ de changer de position pour s'ancrer dynamiquement en un autre point $P'$, connaissant les différences entre les coordonnées $\Delta X$ et $\Delta Y$ des points $P'$ et $P_o$.

Pour que les relations linéaires (5) et (6) soient valables on divise $\Delta X$ et $\Delta Y$ en N pas $\delta X_1$ et $\delta Y_1$ tels que

$$\delta X_1 = \Delta X/N \text{ et } \delta Y_1 = \Delta Y/N.$$

Le bateau doit passer successivement par less points $P_o$, $P_1$, $P_2$, ... $P_i$, ... $P_{N-2}$, $P'$; un calculateur déterminant les variations de champ $\delta H_x$ et $\delta H_y$ entre le point $P_{i-1}$ et le point $P_{i+1}$ par un ancrage dynamique au point $P_i$, par la méthode de la figure 8. L'avance se fait ainsi sensiblement sur une ligne droite jusqu'au point $P'$ après exécution des N pas.

La figure 13 montre le dispositif de façon schèmatique. Les valeurs $\Delta X$ et $\Delta Y$ du déplacement à effectuer sont mémorisées en 2000 et transmis au circuit de commande 300. Ce circuit calcule le nombre de pas N ainsi que $\delta X_1$ et $\delta Y_1$ de façon à ce que $\delta X_1 < e$ et $\delta Y_1 < e$, e étant la longuer maximum pour les approximations linéaires des relations (5) et (6).

Le circuit 300 fournit à sa sortie la commande du pas à effectuer en 303 et 304. Le circuit 303 analogue au circuit de la figure 4b fournit les valeurs du pas $\delta x_1$ et $\delta y_1$ dans les coordonnées mobiles.

6

# 0011522

Le circuit de calcul 70 analogue au circuit 50 de la figure 12, à condition d'inverser entrée et sortie, reçoit sur ses entrées 701 et 702 les valeurs de $\delta x_1$ et $\delta y_1$, sur ses entrées 501, 502, 503 et 504 les valeurs des dérivées partielles $A_1$, $B_1$, $A_2$ et $B_2$. Le circuit 70 fournit sur ses sorties les valeurs de $\delta H_x$ et $\delta H_y$, d'après le calcul suivant la relation (5). Sur une entrée 62 d'un circuit additionneur $C_{15}$ est appliquée la valeur de la composante de champ $H_x^{(o)}$ et sur une autre entrée 703 la valeur de $\delta H_x$. De même le circuit additionneur $C_{16}$ reçoit à ses entrées 704 et 63 les valeurs de $H_y^{(o)}$ et $\delta H_y$. Le circuit 1000 de la figure 6 reçoit sur ses entrées les valeurs des composantes du pas suivant $H_x^{(o)}+\delta H_x$ et $H_y^{(o)}+\delta H_y$, les corrections sont appliquées au circuit 90. Quand le bateau s'est déplacé d'un pas, les corrections appliquées au circuit 90 s'annulent. Ces corrections étant appliquées en 305 et 306 au circuit de commande 300, qui envoie les signaux qui déclenchent les pas. Le circuit 300 contient des compteurs de pas, qui délivrent un signal d'arrêt quand le point P' est atteint.

Il faut remarquer que pour réduire l'influence de l'effet de peau dû, aux pertes diélectriques dans l'eau de mer, il est avantageux de placer les magnétomètres dans des positions dépassant largement la surface de la mer.

On a décrit ainsi un dispositif de positionnement d'un mobile par mesure d'un champ magnétique, le dispositif peut s'appliquer à l'ancrage dynamique d'un bateau par rapport à une plate-forme de forage en mer, mais également à tout autre mobile devant être positionné dans un plan OXY.

## Revendications

1. Dispositif de positionnement d'un mobile (1) en mer dans un plan horizontal repéré par des axes OX et OY, le mobile comportant des moyens pour mesurer son angle d'orientation $\theta$ et le mobile ayant des moteurs, permettant son déplacement dans le plan OXY, le mobile comporte en outre des moyens permettant de déterminer des paramètres dépendant des coordonnées du mobile X et Y dans le plan OXY ainsi qu'une mémoire (43) qui contient des valeurs particulières de ces deux paramètres pour une position choisie de coordonnées $X_P$ et $Y_p$ et que des moyens de calcul (30.1) qui permettent d'élaborer à partir de ces données les signaux de commande ($\delta x$, $\delta y$) des moteurs (90), pour le déplacement du mobile (1) vers la position choisie, caractérisé par le fait que sur une plateforme (2) ou un navire sont disposés des moyens (3) pour produire un champ magnétique alternatif local, par au moins un fil (6, 6') vertical parcouru par un courant alternatif à la fréquence f, l'amplitude de ce champ magnétique ayant pour composantes $H_x$ et $H_Y$ sur les axes OX et OY, que le mobile (1) comporte au moins un couple de magnétomètres ($m_{100}$) fournissant les valeurs des amplitudes des composantes du champ magnétique par rapport à des axes Ox, Oy, liés au mobile; qu'à partir des valeurs de ces composantes du champ magnétique un circuit de calcul (20.1) recevant la valeur de $\theta$ fournit les valeurs des composantes du champ magnétique $H_x$ et $H_Y$ et que les deux paramètres mis en mémoire sont soient: les coordonnées $X_p$, $Y_p$, soient les valeurs des composantes du champ magnétique $H_x^{(P)}$, $H_Y^{(P)}$ correspondant à la position choisie.

2. Dispositif de positionnement suivant la revendication 1, caractérisé par le fait que le champ magnétique local est produit pour un seul fil conducteur, le retour s'effectuant par la mer jusqu'en un lieu éloigné.

3. Dispositif de positionnement suivant les revendications 1 ou 2, caractérisé par le fait que les magnétomètre ($m_{100}$) mesurent les composantes alternatives du champ magnétique $h_x$ et $h_y$, que les signaux correspondant à $h_x$ et $h_y$, sont appliqués à des amplificateurs suivis de filtres accordés sur la fréquence f et que les signaux filtrés de $h_x$ sont appliqués à un démodulateur synchrone (27) des signaux filtrés de $h_y$ et les signaux démodulés de $h_y$ sont appliqués à des détecteurs fournissant des signaux correspondant aux amplitudes des composantes $H_x$ et $H_y$.

4. Dispositif de positionnement suivant la revendication 1, caractérisé par le fait que le mobile (1) comporte trois couples de magnétomètres ($M_{200}$, $M_{300}$, $M_{400}$), le premier placé à l'origine des coordonnées O', le second sur l'axe O'x d'abcisse $l_1$ et le troisième sur l'axe O'y d'ordonnée $l_2$, et que le premier couple de magnétomètres ($M_{200}$) fournit les valeurs $H_x^{(o)}$, $H_y^{(o)}$ le second ($M_{300}$) les valeurs $H_x^{(1)}$, $H_y^{(1)}$ et le troisième ($M_{400}$) les valeurs $H_x^{(2)}$ et $H_y^{(2)}$, ces valeurs étant appliquées à des moyens de calcul des dérivées partielles (100);

$$A_1=\frac{\partial H_x}{\partial x}, \; B_1=\frac{\partial H_x}{\partial y}, \; A_2=\frac{\partial H_y}{\partial x} \text{ et } B_2=\frac{\partial H_y}{\partial y}$$

ainsi que des dérivées partielle;

$$a_1=\frac{\partial x}{\partial H_x}, \; b_1=\frac{\partial x}{\partial H_y}, \; a_2=\frac{\partial y}{\partial H_x} \text{ et } b_2=\frac{\partial y}{\partial H_y}$$

que des moyens de calcul (100) connectés à un circuit mémoire, recevant les valeurs $H_x^{(p)}$ et $H_y^{(p)}$, délivrent à partir de ces valeurs, ainsi que des valeurs $a_1$, $b_1$, $a_2$, $b_2$ et $\theta$, les signaux de correction $\delta x$ et $\delta y$.

7

5. Dispositif de positionnement suivant la revendication 4, caractérisé par le fait que le mobile se trouvant en un point $P_0$ et se déplaçant vers un point P', un circuit mémoire (200) enregistre les valeurs des composantes $\Delta X$ et $\Delta Y$ du vecteur $\overrightarrow{P_0P}$, qu'un circuit de calcul (300) et de commande détermine un nombre de pas N, ces pas égaux ont pour composantes $\Delta X/N$ et $\delta Y_1 = \Delta Y/N$, que ce circuit fournit le signal d'exécution d'un pas, qui appliqué à un autre circuit de calcul (70) recevant des signaux des valeurs $H_x^{(o)}$, $H_y^{(o)}$, $H_x^{(1)}$, $H_y^{(1)}$, $H_x^{(2)}$, $H_y^{(2)}$ et $\theta$ ainsi que les valeurs $A_1$, $B_1$, $A_2$, et $B_2$, élabore les signaux de commande d'exécution d'un pas $\delta x_1$ et $\delta y_1$ appliqué à la commande des moteurs.

## Patentansprüche

1. Positioniervorrichtung für ein Meeresfahrzeug (1), das in einer durch Achsen OX und OY definierten horizontalen Ebene beweglich ist, wobei das Fahrzeug Mittel zur Messung seines Orientierungswinkels $\theta$ aufweist und Motoren hat, die seine Verschiebung in der Ebene OXY ermöglichen, wobei das Fahrzeug außerdem Mittel, die die Bestimmung von von den Koordinaten X und Y des Fahrzeugs in der Ebene OXY abhängigen Parametern ermöglicht, wie auch einen Speicher (43), der bestimmte Werte dieser beiden Parameter für eine gewählte Position der Koordinaten $X_P$ und $Y_P$ enthält, und Rechenmittel (30.1) aufweist, die ausgehend von diesen Daten die Ausarbeitung der Steuersignale ($\delta x$, $\delta y$) der Motoren (90) ermöglichen zur Verschiebung des Fahrzeugs (1) in die gewählte Position, dadurch gekennzeichnet, daß auf einer Plattform (2) oder einem Schiff Mittel (3) angeordnet sind, die ein lokales magnetisches Wechselfeld erzeugen durch mindestens einen sekrechten Draht (6, 6'), der von einem Wechselstrom der Frequenz f durchflossen wird, wobei die Amplitude dieses Magnetfelds als Komponenten $H_X$ und $H_Y$ auf den Achsen OX und OY hat, daß das Fahrzeug (1) mindestens zwei Magnetometer ($m_{100}$) aufweist, die die Werte der Amplituden der Komponenten des Magnetfelds in Bezug auf Achsen Ox, Oy, die mit dem Fahrzeug verbunden sind, liefern; daß ausgehend von den Werten dieser Komponenten des Magnetfelds ein Rechenschaltkreis (20.1), der den Werte von $\theta$ zugeführt erhält, die Werte der Komponenten des Magnetfelds $H_X$ und $H_Y$ liefert und daß die beiden gespeicherten Parameter entweder die Koordinaten $X_P$, $Y_P$ oder die Werte der Komponenten des Magnetfelds $H_X^{(P)}$, $H_Y^{(P)}$ sind, die der gewählten Position entsprechen.

2. Positionierungsvorrichtung nach Anspruch 1, dadurch gekennzeichnet, daß das lokale Magnetfeld für einen einzigen leitenden Draht erzeugt wird, wobei die Rückkehr durch das Meer bis zu einem entfernten Ort erfolgt.

3. Positionierungsvorrichtung nach Anspruch 1 oder 2, dadurch gekennzeichnet, daß die Magnetometer ($m_{100}$) die Wechselkoordinaten des Magnetfelds $h_x$ und $h_y$ messen, daß die $h_x$ und $h_y$ entsprechenden Signale Verstärkern zugeführt werden, die von auf die Frequenz f abgestimmten Filtern gefolgt sind, und daß die gefilterten Signale von $h_x$ einem Synchrondemodulator (27) der gefilterten Signale von $h_y$ zugeführt werden und die demodulierten Signale von $h_y$ Detektoren zugeführt werden, die den Amplituden der Komponenten $H_X$ und $H_Y$ entsprechende Signale liefern.

4. Positioniervorrichtung nach Anspruch 1, dadurch gekennzeichnet, daß das Fahrzeug (1) drei Paare von Magnetometern ($M_{200}$, $M_{300}$, $M_{400}$) aufweist, von denen das erste am Ursprung der Koordinaten 0', das zweite auf der Achse 0'x der Abszisse $l_1$ und das dritte auf der Achse 0'y der Ordinate $l_2$ angeordnet ist, und daß das erste Paar von Magnetometern ($M_{200}$) die Werte $H_x^{(0)}$, $H_y^{(0)}$, das zweite Paar ($M_{300}$) die Werte $H_x^{(1)}$, $H_y^{(1)}$ und das dritte Paar ($M_{400}$) die Werte $H_x^{(2)}$ und $H_y^{(2)}$ liefer, wobei diese Werte an Rechenmittel für die partiellen Ableitungen (100) angelegt werden:

$$A_1 = \frac{\delta H_x}{\delta x}, \ B_1 = \frac{\delta H_x}{\delta y}, \ A_2 = \frac{\delta H_y}{\delta x} \ \text{und} \ B_2 = \frac{\delta H_y}{\delta y}$$

so wie für die partiellen Ableitungen:

$$a_1 = \frac{\delta x}{\delta H_x}, \ b_1 = \frac{\delta x}{\delta H_y}, \ a_2 = \frac{\delta y}{\delta H_x} \ \text{und} \ b_2 = \frac{\delta y}{\delta H_y};$$

daß Rechenmittel (100), die mit einem Speicherschaltkreis verbunden sind und die Werte $H_x^{(p)}$ und $H_y^{(p)}$ empfangen, ausgehend von diesen Werten und den Werten $a_1$, $b_1$, $a_2$, $b_2$ und $\theta$ die Korrektursignale $\delta x$ und $\delta y$ liefern.

5. Positioniervorrichtung nach Anspruch 4, dadurch gekennzeichnet, daß, wenn das Fahrzeug sich an einem Punkt $P_0$ befindet und sich auf einen Punkt P' zu bewegt, ein Speicherschaltkreis (2000) die Werte der Komponenten $\Delta X$ und $\Delta Y$ des Vektors $\overrightarrow{P_0P}'$ registriert, daß ein Rechen- und Steuerschaltkreis (300) eine Anzahl von Schritten N bestimmt, wobei diese gleichen Schritte als Komponenten $\Delta X/N$ und $\delta Y_1 = \Delta Y/N$ haben, daß dieser Schaltkreis das Ausführsignal für einen Schritt liefert, das, wenn es an einen anderen Rechenschaltkreis (70) angelegt wird, der die Signale der Werte $H_x^{(0)}$, $H_y^{(0)}$, $H_x^{(1)}$, $H_y^{(1)}$, $H_x^{(2)}$, $H_y^{(2)}$ und $\theta$ wie auch die Werte $A_1$, $B_1$, $A_2$, $B_2$ empfängt, die Ausführsteuersignale für einen Schritt $\delta x_1$ und $\delta y_1$ erarbeitet, die an die Steuerung der Motoren angelegt werden.

8

# 0011522

**Claims**

1. Positioning device for a moving body (1) in the sea in a horizontal plane, marked by axes OX and OY, the moving body comprising means for measuring its orientation angle $\theta$ and the moving body having motors permitting its displacement in the plane OXY, the moving body further comprising means permitting the determination of parameters depending on the coordinates of the moving body X and Y in the plane OXY as well as a memory (43) which contains particular values of these two parameters for a chosen position of coordinates $X_P$ and $Y_P$ and computer means (30.1) permitting to elaborate from these data the control signals ($\delta x$, $\delta y$) of the motors (90), for the displacement of the moving body (1) into the chosen position, characterized in that on a platform (2) or a ship are disposed means (3) for producing a local alternating magnetic field, by at least one vertical wire (6, 6') traversed by an alternating current at the frequency f, the amplitude of this magnetic field having for components $H_x$ and $H_y$ on the axes OX and OY, that the moving body (1) comprises at least one couple of magnetometers ($m_{100}$) furnishing the values of the amplitudes of the components of the magnetic field in relation to the axes Ox, Oy linked to the moving body; that based on the values of these components of the magnetic field a computing circuit (20.1) receiving the value of $\theta$ furnishes the values of the components of the magnetic field $H_x$ and $H_y$ and that the two memorized parameters are the coordinates $X_P$, $Y_P$ or the values of the components of the magnetic field $H_x^{(P)}$, $H_y^{(P)}$ corresponding to the chosen position.

2. Positioning device according to claim 1, characterized in that the local magnetic field is produced by a single conductor wire, the return being effected by sea to a distant place.

3. Positioning device according to the claims 1 or 2, characterized in that the magnetometers ($m_{100}$) measure the alternative components of the magnetic field $h_x$ and $h_y$, that the signals corresponding to $h_x$ and $h_y$ are applied to amplifiers followed by filters which are tuned on the frequency f and that the filtered signals of $h_x$ are applied to a synchrone demodulator (27) of the filtered signals of $h_y$ and the demodulated signals of $h_y$ are applied to detectors furnishing signals corresponding to the amplitudes of the components $H_x$ and $H_y$.

4. Positioning device according to claim 1, characterized in that the moving body (1) comprises three couples of magnetometers ($M_{200}$, $M_{300}$, $M_{400}$), the first placed at the origin of the coordinates 0', the second on the axis 0'x of the abcisse value $l_1$ and the third on the axis 0'y of the ordinate value $l_2$, and that the first couple of magnetometers ($M_{200}$) supplies the values $H_x^{(0)}$, $H_y^{(0)}$, the second ($M_{300}$) the values $H_x^{(1)}$, $H_y^{(1)}$ and the third ($M_{400}$) the values $H_x^{(2)}$, $H_y^{(2)}$, these values being applied to computing means of the partial derivatives (100);

$$A_1 = \frac{\delta H_x}{\delta x}, \; B_1 = \frac{\delta H_x}{\delta y}, \; A_2 = \frac{\delta H_y}{\delta x} \; \text{und} \; B_2 = \frac{\delta H_y}{\delta y}$$

as well as the partial derivatives

$$a_1 = \frac{\delta x}{\delta H_x}, \; b_1 = \frac{\delta x}{\delta H_y}, \; a_2 = \frac{\delta y}{\delta H_x} \; \text{und} \; b_2 = \frac{\delta y}{\delta H_y};$$

that computing means (100) connected to a memory circuit and receiving the values $H_x^{(p)}$, $H_y^{(p)}$ deliver, based on these values, as well as the values $a_1$, $b_1$, $a_2$, $b_2$ and $\theta$ the correction signals $\delta x$ and $\delta y$.

5. Positioning device according to claim 4, characterized in that the moving body being situated in a point $P_0$ and moving towards a point $P'$, a memory circuit (2000) registers the values of the components $\Delta X$ and $\Delta Y$ of the vector $\overrightarrow{P_0 P'}$, that a computing and control circuit (300) determines a receiving signals of the values $H_x^{(0)}$, $H_y^{(0)}$, $H_x^{(1)}$, $H_y^{(1)}$, $H_x^{(2)}$, $H_y^{(2)}$ and $\theta$ as well as the values $A_1$, $B_1$, $A_2$, $B_2$, elaborates the control signals for the execution of a step $\delta x_1$ and $\delta y_1$ applied to the control of the motors.

9

FIG_1

FIG_5

1

FIG_2a

FIG_2b

0011522

**0 011 522**

FIG_3

FIG_4 a

FIG_4 b

3

# FIG_6

# FIG_7　　　　FIG_8

# FIG_9

# FIG_10

# FIG_11

# FIG_12

# FIG_13